# EUROPÄISCHE PATENTSCHRIFT

(11) **EP 1 525 589 B1**
(45) Veröffentlichungstag und Bekanntmachung des Hinweises auf die Patenterteilung: **17.02.2010**
(21) Anmeldenummer: 04713465.5
(22) Anmeldetag: 21.02.2004
(51) Int. Cl.: G21C 19/36

(54) **VERFAHREN UND VORRICHTUNG ZUM ZERLEGEN EINES STEUERELEMENTES EINES SIEDEWASSERREAKTORS**
METHOD AND DEVICE FOR DISMANTLING A CONTROL ELEMENT OF A BOILING WATER REACTOR
PROCEDE ET DISPOSITIF POUR DEMONTER UN ELEMENT DE COMMANDE D'UN REACTEUR A EAU BOUILLANTE

(30) Priorität: 08.04.2003 DE 10316248
(43) Veröffentlichungstag der Anmeldung: 27.04.2005
(73) Patentinhaber: AREVA NP GmbH, 91052 Erlangen (DE)
(72) Erfinder: HUMMEL, Wolfgang, 91085 Weisendorf (DE); NAHR, Wolfgang, 91056 Erlangen (DE); LÜCKEN, Wolfgang, 96114 Hirschaid (DE)
(74) Vertreter: Mörtel & Höfner
(86) Internationale Anmeldenummer: PCT/EP2004/001721
(87) Internationale Veröffentlichungsnummer: WO 2004/090911

(56) Entgegenhaltungen:
- EP-A- 0 853 320
- DE-A- 2 942 406
- DE-A- 4 017 987
- US-A- 4 747 995
- US-A- 5 055 236

## Beschreibung

Die Erfindung bezieht sich auf ein Verfahren und eine Vorrichtung zum Zerlegen eines Steuerelementes eines Siedewasserreaktors.

Bei der Entsorgung radioaktiv kontaminierter Teile eines Kernreaktors ist es in vielen Fällen notwendig, diese zu zerlegen, um den für die Endlagerung erforderlichen Platzbedarf zu reduzieren. Dies geschieht zum Beispiel unter Wasser im Brennelement-Lagerbecken.

Aus der DE 29 42 406 C2 ist es beispielsweise bekannt, den Brennelementkasten eines Brennelementes eines Siedewasserreaktors mit Hilfe von Rollenschneidmessern in der Axialrichtung entlang seiner Ecken zu zerschneiden, so dass flache Bänder entstehen. Diese werden zusätzlich quer zu ihrer Längsrichtung zerschnitten, um den Platzbedarf bei der Endlagerung weiter zu verringern.

Ein besonderes Problem tritt beim Zerlegen eines Steuerelementes eines Siedewasserreaktors auf Grund der in den Steuerelementblättern vorhandenen Neutronenabsorber auf, bei denen es sich je nach Ausführung des Steuerelementes beispielsweise um mit Borkarbid BC₄ gefüllte Röhrchen oder um Absorberblätter aus Hafnium Hf handelt, und die nicht in das Beckenwasser freigesetzt werden dürfen.

Dabei ist es grundsätzlich bekannt, die Steuerelementblätter durch in Axialrichtung durchgeführte Schnitte vom massiven, aus Stahl bestehenden kreuzförmigen Kernkörper abzutrennen. Die abgetrennten Steuerelementblätter können dann zur weiteren Kompaktierung mit einem aus der EP-A-0 853 320 bekannten Verfahren zu Spulen aufgewickelt werden.

Das Abtrennen der Steuerelementblätter mit nahe am Kreuzungspunkt verlaufenden axialen Schnitten ist aber technisch problematisch. In der US 5,055,236 A wird deshalb vorgeschlagen, die Steuerelemente axial entlang der Mittenachse in zwei Hälften zu zersägen, die jeweils aus zwei rechtwinklig zueinander angeordneten Steuerelementblättern bestehen.

Der Erfindung liegt nun die Aufgabe zu Grunde, ein Verfahren zum Zerlegen eines Steuerelementes eines Siedewasserreaktors anzugeben, bei dem möglichst wenig Sekundärabfall entsteht und die Freisetzung von Neutronenabsorbermaterial weitgehend vermieden ist. Außerdem liegt der Erfindung die Aufgabe zu Grunde eine Vorrichtung zur Durchführung des Verfahrens anzugeben.

Die erstgenannte Aufgabe wird gemäß der Erfindung gelöst mit einem Verfahren mit den Merkmalen des Patentanspruches 1. Da gemäß diesen Merkmalen zwei einander gegenüberliegende Steuerelementblätter jeweils entlang einer sich in Längsrichtung erstreckenden und in der Nähe der Längsachse angeordneten Schnittlinie von den anderen beiden Steuerelementblättern abgetrennt werden, d. h. die Trenn- oder Schnittlinie im kreuzförmigen Kernkörper des Steuerelementes verläuft, wird eine Beschädigung der das Neutronenabsorbermaterial enthaltenden Bereiche und damit eine Freisetzung des Neutronenabsorbermaterials sicher vermieden. Da darüber hinaus zum Schneiden ein Rollschneidverfahren verwendet wird, ist auch das Entstehen von weiteren Sekundärabfall, wie er beispielsweise in Form von Schneidspänen bei einem Fräsvorgang auftreten würde, praktisch vermieden.

Nach dem Abtrennen der beiden Steuerelementblätter können diese auf die nicht abgetrennten Steuerelementblätter gelegt werden, so dass bei entferntem Geschwindigkeitsbegrenzer eine platzsparende Kompaktierung möglich ist.

In einer vorteilhaften Ausgestaltung der Erfindung erfolgt der Rollschnitt jeweils auf beiden Flachseiten des Steuerelementblattes mit gegeneinander angestellten Rollschneiden. Auf diese Weise ist die für jede Rollschneide erforderliche Schnitttiefe halbiert und die zum Schneiden notwendigen Andruckkräfte sind reduziert.

Die zweitgenannte Aufgabe wird gemäß der Erfindung gelöst mit einer Vorrichtung mit den Merkmalen des Patentanspruches 3, deren Vorteile sich sinngemäß aus den bei den Verfahrensansprüchen jeweils erläuterten Vorteilen ergeben.

Vorteilhafte Ausgestaltungen der Vorrichtung sind in den weiteren Unteransprüchen angegeben.

Zur weiteren Erläuterung der Erfindung wird auf das Ausführungsbeispiel der Zeichnung verwiesen. Es zeigen:
Fig. 1 eine schematische Gesamtdarstellung einer Vorrichtung gemäß der Erfindung,
Fig. 2 einen Querschnitt durch ein Steuerelement, mit an ihn angesetzten Schneidrollen der erfindungsgemäßen Vorrichtung in einer schematisierten Darstellung,
Fig. 3 einen Querschnitt durch das Steuerelement, mit anliegenden Führungsrollen der Vorrichtung ebenfalls in einer schematisierten Darstellung.

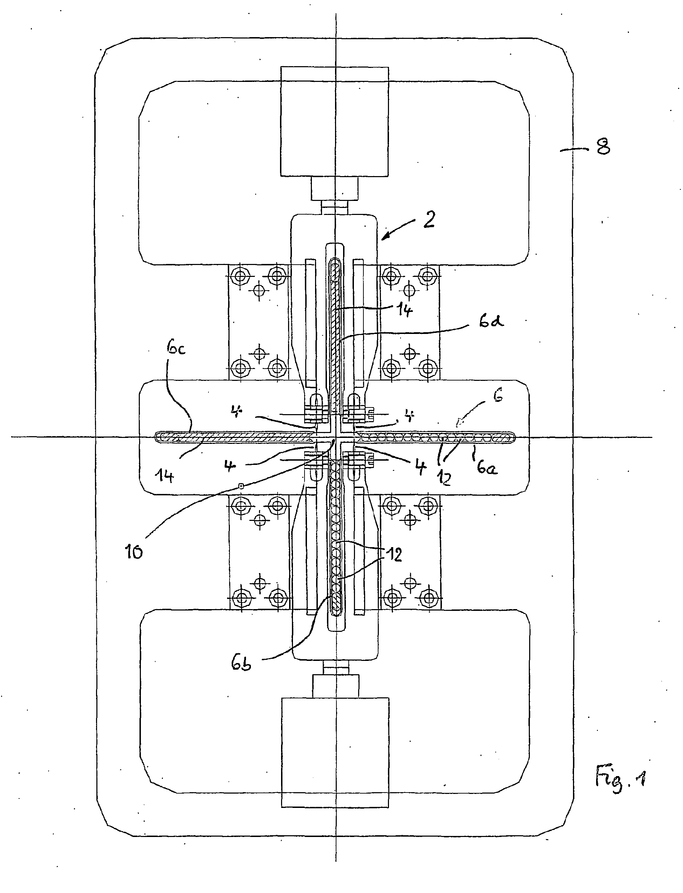

Gemäß Fig. 1 enthält die Vorrichtung eine Schneideinheit 2 mit vier Schneidrollen 4, die in Arbeitsposition jeweils paarweise auf einander gegenüberliegende Steuerelementblätter 6a, c eines Steuerelementes 6 angestellt sind. Die Schneideinheit 2 ist in einem Rahmen 8 angeordnet, der das Steuerelement 6 umgibt und die beim Schneiden auftretenden Anstellkräfte in sich geschlossen abträgt. Die Relativbewegung zwischen Steuerelement 6 und Schneideinheit 2 in Richtung der Längsmittenachse des Steuerelementes 6 erfolgt entweder durch Bewegen des Steuerelementes 6 bei ruhender Schneideinheit 2, beispielsweise mit einem Hubwerk, oder durch Verfahren der gesamten Vorrichtung entlang dem ruhenden Steuerelement 2.

In der Figur ist zu erkennen, dass das Steuerelement 6 vier, von einem kreuzförmigen, massiven Kernkörper 10 ausgehende, kreuzförmig angeordnete Steuerelementblätter 6a-d enthält, in deren Hohlräume Neutronenabsorber, beispielsweise mit Borkarbid BC₄ gefüllte Absorberröhrchen 12 (veranschaulicht anhand der Steuerelementblätter 6a,b) oder in einer alternativen Ausgestaltung Absorberblätter 14 aus Hafnium Hf (veranschaulicht anhand der Steuerelementblätter 6c,d), eingebracht sind.

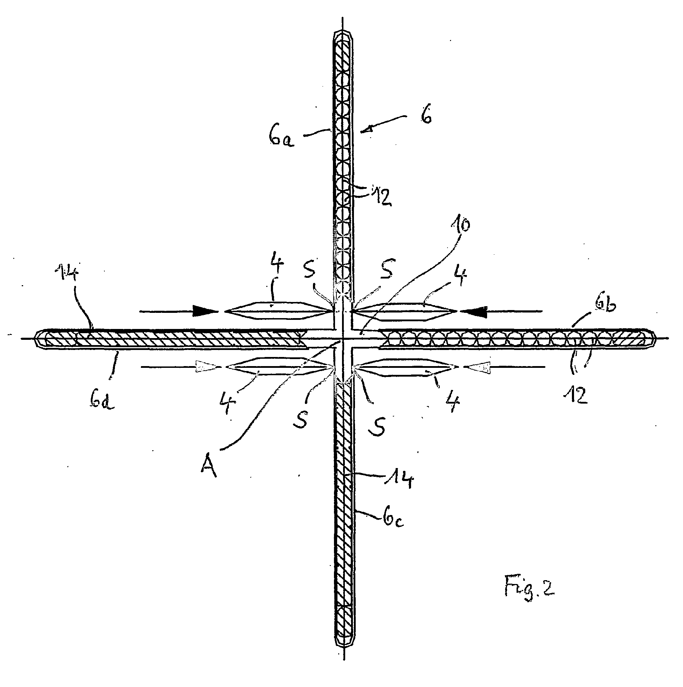

In Fig. 2 ist die Wirkungsweise der Vorrichtung deutlicher veranschaulicht. Die Schneidrollen 4 sind im Bereich des Kernkörpers 10 an die Flachseiten der Steuerelementblätter 6a und 6c jeweils paarweise und einander gegenüberliegend in Richtung der Pfeile 16 angestellt. Durch eine Vorschubbewegung senkrecht zur Längsmittenachse A wird ein Rollschnitt entlang einer sich in Längsrichtung, d.h. senkrecht zur Zeichenebene und parallel zur Längsmittenachse A erstreckenden Schnittlinie S in der Nähe des Kreuzungspunktes bzw. in der Nähe der Längsmittenachse A durchgeführt.

Die Anstellwege der beiden gegenüberliegenden Schneidrollen 4 werden soweit begrenzt, dass eine Berührung ihrer Schneidvorderkanten gerade nicht mehr möglich ist. Die Anstellbewegung der Schneidrollen 4 senkrecht zu den Flachseiten der jeweils abzutrennenden Steuerelementblätter 6a,c erfolgt im Ausführungsbeispiel mit Hydraulikzylindern. Insbesondere ist die Kraft, mit der die Schneidrollen 4 angestellt werden, steuerbar, so dass trotz der von der axialen Schneidposition abhängigen unterschiedlichen Werkstoffeigenschaften des Steuerelementes 6 eine nahezu konstante Schneidgeschwindigkeit über die gesamte Länge der Steuerelementblätter 6a, c erzielt werden kann. Eine weitere Alternative zum kraftmäßigen Anstellen der Scneidrollen 4 mittels Hydraulikzylinder ist die Verwendung einer elektromechanischen Zustelleinheit, mit der pro Teilschnittvorgang ein Zustellweg mit gleichzeitiger Kraftüberwachung vorgegeben werden kann.

Da an jeder Trennstelle zwei Schneidrollen 4 mit zumindest annähernd gleicher Andruckkraft wirken, verringert sich die erforderliche Trenntiefe auf die Hälfte und durch die annähernd gleiche Materialverdrängung von beiden Seiten des Steuerelementblattes wird ein Verbiegen weitgehend vermieden.

Alternativ zu der in der Fig. dargestellten paarweisen Anordnung von Schneidrollen 4 kann auch für jedes der beiden abzutrennenden Steuerblätter 6a,c nur eine einzige Schneidrolle 4 vorgesehen sein, der eine jeweils eine flächig an das Steuerelementblatt 6a bzw. c angelegte schneidenfreie Gegenrolle zugeordnet ist.

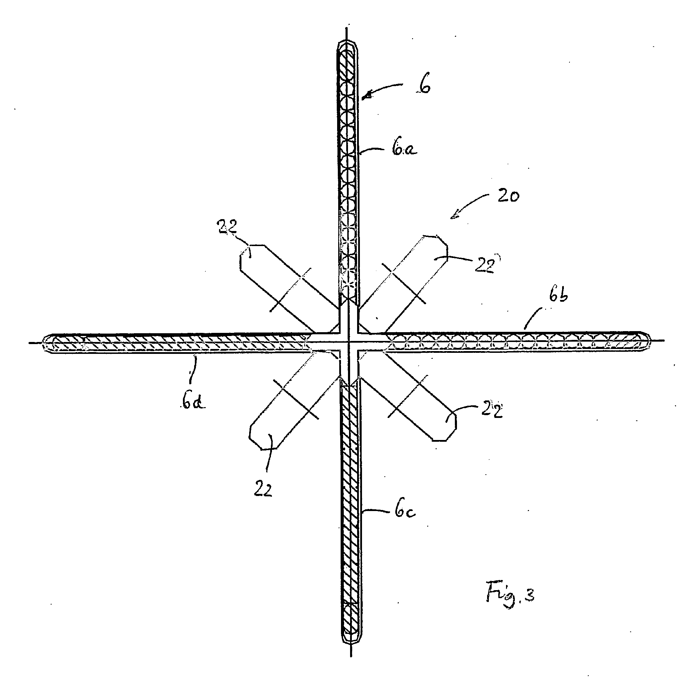

Um eine sichere Führung des Steuerelementes 6 bzw. der Schneideinheit zu ermöglichen, ist in Längsrichtung des Steuerelementes 2 gesehen zu beiden Seiten der Schneideinheit gemäß Fig. 3 eine Führung 20 vorgesehen, die jeweils aus vier diagonal auf die Längsmittenachse A ausgerichtete Führungsrollen 22 besteht.

### Bezugszeichenliste

- 2: Schneideinheit
- 4: Schneidrollen
- 6: Steuerelement
- 6a-d: Steuerelementblatt
- 8: Rahmen
- 10: Kernkörper
- 12: Absorberröhrchen
- 14: Absorberblätter
- 16: Pfeil
- 20: Führung
- 22: Führungsrollen

- S: Schnittlinie
- A: Längsmittenachse

## Patentansprüche

1. Verfahren zum Zerlegen eines Steuerelementes (6) eines Siedewasserreaktors, das vier von einem kreuzförmigen Kernkörper (10) ausgehende, kreuzförmig angeordnete Steuerelementblätter (6a-d) enthält, bei dem Steuerelementblätter (10) vom Steuerelement (6) abgetrennt werden,
**dadurch gekennzeichnet, dass**
zwei einander gegenüberliegende Steuerelementblätter (6a,c) jeweils entlang einer sich in Längsrichtung erstreckenden und in der Nähe der Längsmittenachse (A) im Bereich des Kreuzkörpers (10) angeordneten Schnittlinie (S) mit einem Rollschneidverfahren von den anderen beiden Steuerelementblättern (6b,d) abgetrennt werden.

2. Verfahren nach Anspruch 1, bei dem jeweils auf beiden Flachseiten des Steuerelementblattes (6a,c) ein Rollschnitt mit gegeneinander angestellten Schneidrollen (4) erfolgt.

3. Vorrichtung zur Durchführung des Verfahrens nach Anspruch 1 oder 2, mit einer Führung (20) zur axial relativbeweglichen Aufnahme des Steuerelementes (6), und mit einer Schneideinheit (2) mit wenigstens zwei jeweils gegen die Flachseiten zweier einander gegenüberliegender Steuerelementblätter (6a,c) anstellbaren Schneidrollen (4).

4. Vorrichtung nach Anspruch 3, bei der vier sich jeweils paarweise gegenüberliegende Schneidrollen (4) vorgesehen sind.

5. Vorrichtung nach Anspruch 3 oder 4, bei der die Schneidrollen (4) hydraulisch oder elektromechanisch anstellbar sind.

6. Vorrichtung nach einem der Ansprüche 3 bis 5, bei der die Schneideinheit (2) in einem das Steuerelement (6) in Arbeitsposition umgebenden Rahmen (8) angeordnet ist.

7. Vorrichtung nach einem der Ansprüche 3 bis 6, bei der zur Führung (20) zu beiden Seiten der Schneideinheit (2) vier auf die Längsmittenachse (A) gerichtete Führungsrollen (22) vorgesehen sind.

## Claims

1. Method for dismantling a control element (6) of a boiling water reactor which includes four control element leaves (6a-d) which are arranged in a cross shape and originate from a cross-shape core body (10), in which method control element leaves (6a, c) are detached from the control element (6), **characterized in that** two control element leaves (6a, c) located opposite one another are each separated from the other two control element leaves (6b, d) along a cutting line (S), which extends in the longitudinal direction and is arranged in the vicinity of the longitudinal center axis (A) in the region of the cross body (10), using a roll-cutting process.

2. Method according to Claim 1, in which a roll cut is made on each of the two flat sides of the control element leaf (6a, c) using oppositely inclined cutting rolls (4).

3. Device for carrying out the method according to Claim 1 or 2, having a guide (20) for receiving the control element (6) such that it can move in relative terms in the axial direction, and having a cutting unit (2) with at least two cutting rolls (4) which can each be placed onto the flat sides of two control element leaves (6a, c) located opposite one another.

4. Device according to Claim 3, in which four cutting rolls (4) are provided, in each case arranged opposite one another in pairs.

5. Device according to Claim 3 or 4, in which the cutting rolls (4) can be hydraulically or electromechanically actuated.

6. Device according to one of Claims 3 to 5, in which the cutting unit (2) is arranged in a frame (8) which surrounds the control element (6) in the working position.

7. Device according to one of Claims 3 to 6, in which four guide rolls (22) directed onto the longitudinal center axis (A) are provided for guidance (20) on both sides of the cutting unit (2).

## Revendications

1. Procédé pour le démontage d'un élément de commande (6) d'un réacteur à eau bouillante, qui contient quatre lames d'élément de commande (6a-d) partant d'un corps de noyau (10) cruciforme et disposé en forme de croix, dans lequel des lames d'élément de commande (6) sont séparées de l'élément de commande (6),
**caractérisé en ce que**
deux lames d'élément de commande (6a, c) se faisant face sont séparées des deux autres lames d'élément de commande (6b, d) avec un procédé de découpe par roulement le long d'une ligne de coupe (S) s'étendant dans le sens longitudinal et disposée à proximité de l'axe médian longitudinal (A) dans la zone du corps de noyau (10).

2. Procédé selon la revendication 1, dans lequel une découpe par roulement avec des galets de coupe (4) placés l'un contre l'autre s'effectue à chaque fois sur les deux côtés plats de la lame d'élément de commande (6a, c).

3. Dispositif pour la mise en oeuvre du procédé selon la revendication 1 ou 2, comprenant un guide (20) pour le logement à mobilité relative de l'élément de commande (6), et une unité de coupe (2) dotée d'au moins deux galets de coupe (4) pouvant être placés à chaque fois contre les côtés plats de deux lames d'élément de commande (6a, c) se faisant face.

4. Dispositif selon la revendication 3, sur lequel quatre galets de coupe (4) se faisant face par paires sont prévus.

5. Dispositif selon la revendication 3 ou 4, sur lequel les galets de coupe (4) peuvent être mis en place de façon hydraulique ou électromécanique.

6. Dispositif selon l'une quelconque des revendications 3 à 5, sur lequel l'unité de coupe (2) est disposée dans un cadre (8) entourant l'élément de commande (6) dans la position de travail.

7. Dispositif selon l'une quelconque des revendications 3 à 6, sur lequel quatre galets de guidage (22) orientés vers l'axe médian longitudinal (A) sont prévus pour le guidage (20) des deux côtés de l'unité de coupe (2).
